# EUROPÄISCHE PATENTANMELDUNG

(11) **EP 1 086 769 A2**
(43) Veröffentlichungstag der Anmeldung: **28.03.2001**
(21) Anmeldenummer: 00113451.9
(22) Anmeldetag: 24.06.2000
(51) Int. Cl.: B23D 47/04, B23D 47/02, B27B 5/06

(54) **Maschinentisch für eine Plattenaufteilsäge**

(30) Priorität: 22.09.1999 DE 19945315
(71) Anmelder: Holzma-Maschinenbau GmbH, 75365 Calw-Holzbronn (DE)
(72) Erfinder: Kempf, Martin, 72202 Nagold (DE); Gesell, Gerd, 74385 Bad Teinach (DE)
(74) Vertreter: Dreiss, Fuhlendorf, Steimle & Becker

(57) **Zusammenfassung**

Es wird ein Maschinentisch (10) für Plattenaufteilsägen beschrieben, bei dem sichergestellt ist, dass einschub- und ausschubseitig vorgesehene, die Tischplatte (12) quer zu deren Schnittspalt (16) durchsetzende Eingriffsnuten (18, 20) zur Aufnahme des unteren Zangenschenkels (24) jeweils einer Spannzange einer Vorschubvorrichtung während Aufteilschnitten spaltinnenseitig sowie benachbart zum Schnittspalt (16) an der Tischoberseite verschlossen sind.

Zu diesem Zweck ist in den einschubseitigen Eingriffsnuten (18) jeweils ein in Vorschubrichtung durch den Zangenschenkel (24) verschiebbares Nutverschlußelement (34) und in den ausschubseitigen Eingriffsnuten (20) jeweils ein durch das Nutverschlußelement (34) verschiebbarer Einsatz (28) vorgesehen, die sich beide bei Zurückbewegen des Zangenschenkels (24) selbsttätig in ihrer Verschlußstellung zurückbewegen.

## Beschreibung

Die Erfindung betrifft einen Maschinentisch für eine Plattenaufteilsäge in einer im Oberbegriff des Anspruches 1 erläuterten Ausbildung.

Die beiderseits des Schnittspaltes an der Tischoberseite vorgesehenen und zu diesem quer verlaufenden Eingriffsnuten dienen dazu, in der Schlußphase einer Plattenaufteiloperation den unteren Zangenschenkel einer das Plattenmaterial für dessen Vor- und ggf. Rücktransport festhaltenden Spannzange einer Vorschubvorrichtung aufnehmen zu können.

Es besteht dadurch bspw. die Möglichkeit, ein Plattenreststück über den Schnittspalt hinweg und ggf. zu einer am Maschinentisch ausschubseitig vorgesehenen Abfallklappe zu transportieren.

Die in den am Maschinentisch ausschubseitig vorgesehenen Eingriffsnuten angeordneten Schieber erfüllen dabei zwei Aufgaben: Zum einen dienen sie als Nutverschluß, so dass während mit hoher Schnittgeschwindigkeit erfolgenden Trennschnitten anfallende Feinspäne und Schnittstaub nicht aus den Eingriffsnuten austreten und die Maschinenumgebung verschmutzen können. Zum anderen überbrücken diese Schieber in ihrer Ausgangsstellung am Schnittspalt die jeweilige Eingriffsnut, so dass am Schnittspalt ausschubseitig die Tischoberseite eine geschlossene Plattenauflagefläche aufweist, was für die Schnittqualität bei der Verarbeitung insbesondere von sehr dünnem Plattenmaterial von ausschlaggebender Bedeutung ist.

Diese Schieber verharren dabei solange in ihrer Ausgangsstellung, bis zum Durchschieben eines ggf. nicht mehr verwertbaren Plattenreststreifens- oder Plattenreststückes, die Spannzangen der Vorschubvorrichtung über den Schnittspalt hinwegbewegt werden. In diesem Falle werden dann die Schieber vom unteren Zangenschenkel der Spannzangen gegen die Wirkung einer Speicherkraft in den Eingriffsnuten mitgenommen.

Trotz der erläuterten Überbrückung der ausschubsseitigen Eingriffsnuten durch die Schieber konnten bisher insbesondere bei dünnem Plattenmaterial die erzielten Arbeitsergebnisse bei Trennschnitten noch nicht ganz befriedigen, weil nämlich die zu den ausschubseitig im Maschinentisch vorgesehenen und von den Schiebern verschlossenen Eingriffsnuten fluchtenden Eingriffsnuten auf der Einschubseite des Maschinentisches im Bereich des Schnittspaltes nach oben offen blieben.

Bei aufzuteilenden Platten in einer Dicke von Bruchteilen eines Millimeters bis zu wenigen Millimetern, z.B. 0,1 mm bis 3,0 mm ist auch bei Verwendung einer als Auflage dienenden Schonplatte nicht zu vermeiden, dass die Platten, auch wenn sie zu einem Plattenpaket geschichtet und auf dem Maschinentisch durch einen Druckbalken oberhalb des Schnittspaltes festgelegt werden, im Bereich der Eingriffsnuten geringfügig durchhängen.

Bei der Durchführung eines Trennschnittes fächert deshalb solches Plattenmaterial zwangsläufig auf, so dass die einschubseitig am Plattenstapel entstehende Schnittkante unsauber ausfällt, was bisher bei speziellem Plattenmaterial, wie Leiterplatten, nur dadurch noch in einem tolerablen Umfange gehalten werden konnte, dass man z.B. ein Paket von Leiterplatten zwischen zwei bis zu 3 mm dicken Schonplatten gepackt hat.

Abgesehen von dem dazu notwendigen Aufwand an solchen Schonplatten, deren Handling und dem durch sie bedingten Abfallaufkommen, war jedoch nicht zu ermeiden, dass sich trotzdem an der angesprochenen Schnittkante der einzelnen Platten eines solchen Plattenpaketes ein Grat ausbildete, der häufig durch aufwendiges Nacharbeiten beseitigt werden mußte.

Hier setzt nun die Erfindung ein. Es liegt ihr die Aufgabe zugrunde, einen Maschinentisch in einer Ausbildung gemäß dem Oberbegriff des Anspruches 1 anzugeben, der zu beiden Seiten seines Schnittspaltes bzw. sowohl an dem einschubseitigen als auch an dem ausschubseitigen, durch einen Trennschnitt herzustellenden Schnittkanten eine einwandfreie Kantenausbildung ohne Verwendung zusätzlicher Schonplatten ermöglicht.

Diese Aufgabe wird erfindungsgemäß durch die kennzeichnenden Merkmale des Anspruches 1 gelöst.

Erfindungsgemäß sind somit auch die auf der Einschubseite des Maschinentisches vorhandenen Eingriffsnuten im Bereich ihres dem Schnittspalt zugekehrten Nutendes durch ein Nutverschlußelement verschlossen, das zugleich im Bereich des Schnittspaltes die betreffende Eingriffsnut oben verschließt.

Dadurch sind diese Eingriffsnuten oben überbrückt, so dass dünnes Plattenmaterial unter Einwirkung des Schnittdruckes nicht in die Eingriffsnuten verdrängt und dadurch die Qualität der Schnittkante beeinträchtigt werden kann.

Zusätzlich wird in Nutlängsrichtung ein Nutverschluß erreicht, so dass auch aus diesen Eingriffsnuten keine Feinspäne und Schnittstaub aus dem Maschinentisch ins Freie entweichen können.

In der Ausgangsstellung der Nutverschlußelemente befinden sich diese mit einer Stirnfläche in der Ebene der den Schnittspalt einschubseitig begrenzenden Spaltwand, so dass diese, analog zu der anderen Spaltwand, die von den in den ausschubseitigen Eingriffsnuten vorhandenen Schiebern verschlossen gehalten wird, gleichfalls durchgehend geschlossen wird.

Wenn dann gegen Ende einer Aufteiloperation die unteren Zangenschenkel von Spannzangen, die den aufzuteilenden Plattenstapel transportieren, im Verlaufe von Vorschubbewegungen in die einschubseitigen Eingriffsnuten eingeschoben werden und diese schließlich auf deren Nutverschlußelemente auftreffen, so werden diese von den Spannzangen bzw. deren unterem Zangenschenkel entgegen einer Speicherkraft aus ihrer Ausgangs- bzw. Verschlußstellung in Richtung auf die ausschubseitigen Eingriffsnuten verschoben, wobei sie den Schnittspalt durchqueren und dann die Schieber in diesen Eingriffsnuten mitnehmen.

Sobald dann das Plattenmaterial zur Durchführung eines ggf. letzten Plattenaufteil- oder Plattenstreifenablängschnittes auf dem Maschinentisch positioniert ist, werden danach die Spannzangen mit dem verbleibenden Stapelreststück zumindest um eine solche Strecke zurückgesteuert, dass sich die Nutverschlußelemente und damit auch die Schieber wieder selbsttätig in ihre Ausgangslage zurückbewegen können, so dass anschließend der durchzuführende Trennschnitt erfolgen kann. Danach können dann die Spannzangen mit dem verbliebenen Stapelreststück ggf. durch die Plattenaufteilsäge hindurchtransportiert und einem Abfallschacht zugeführt werden, wobei auch in diesem Falle durch die Spannzangen zunächst wieder nur die Nutverschlußelemente zur Ausschubseite hin verschoben und schließlich durch diese auch wieder die Schieber in den ausschubseitigen Eingriffsnuten entsprechend weit in Nutlängsrichtung mitgenommen werden.

Mit der programmgesteuerten Rückbewegung der Spannzangen stellen sich auch die Schieber und Nutverschlußelemente wieder selbsttätig in ihre Ausgangsstellung zurück.

Zu bevorzugende Ausgestaltungen der Nutverschlußelemente sind Gegenstand der Ansprüche 2 und 3.

In der Zeichnung ist ein Ausführungsbeispiel der Erfindung dargestellt. Es zeigen:
- Figur 1: eine Draufsicht des Maschinentisches einer Plattenaufteilsäge in verkürzter Darstellung, wobei sich Nutverschlußelemente und Schieber der Eingriffsnuten in ihrer Ausgangsstellung befinden,
- Figur 2: einen Ausschnitt der Figur 1 in vergrößertem Maßstab, wobei sich das gezeigte Nutverschlußelement und der ihm zugeordnete Schieber sich in ihrer Verschiebeendstellung befinden,
- Figur 3: einen Querschnitt des Maschinentisches entlang der Linie III-III der Figur 1,
- Figur 4: einen Teilschnitt des Maschinentisches entlang der Linie IV-IV der Figur 2,
- Figur 5: eine Draufsicht eines Nutverschlußelementes,
- Figur 6: eine Stirnansicht des Nutverschlußelementes gemäß Figur 5.

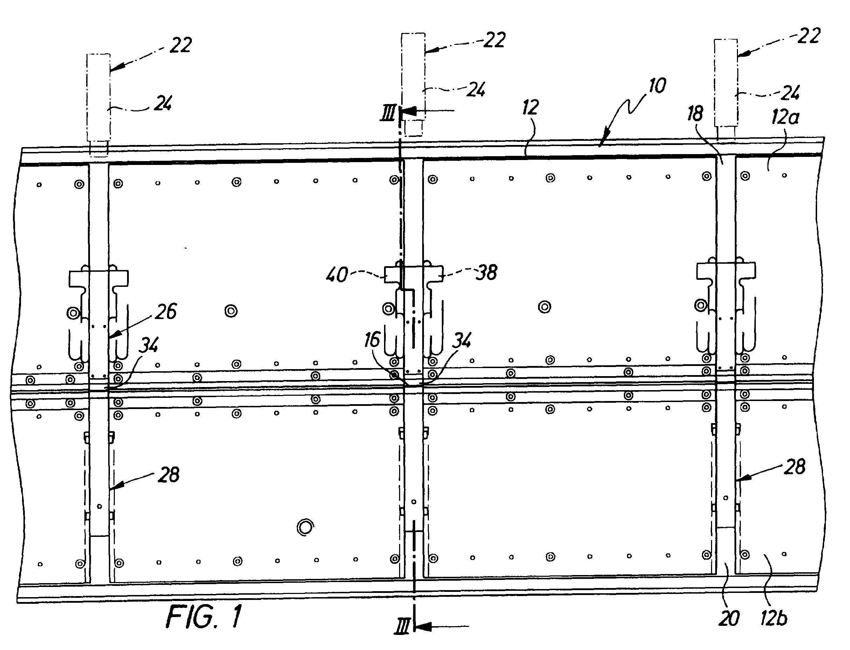

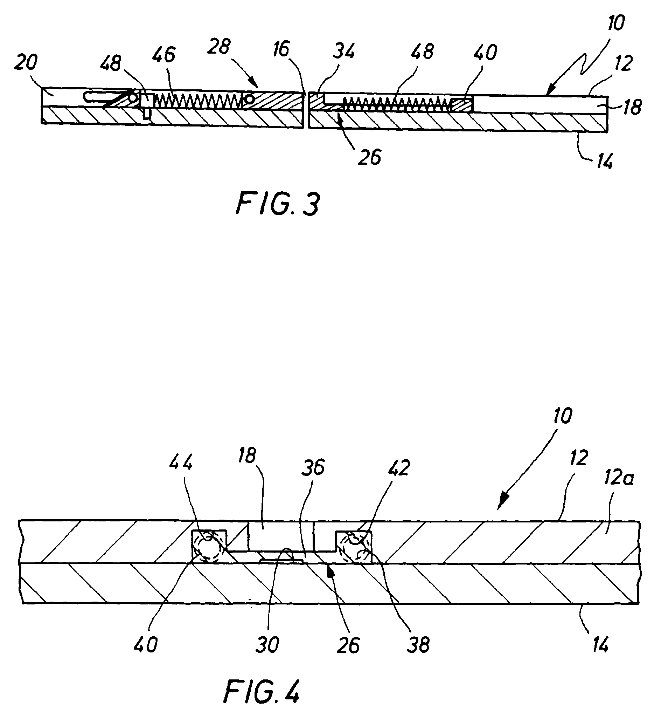

Der in Figur 1 in Draufsicht gezeigte, horizontale Maschinentisch 10 einer Plattenaufteilsäge weist in Platteneinschubrichtung für aufzuteilendes Plattenmaterial eine schmale Ausbildung auf und ist z.B. aus einer oberen Tischplatte 12 und einer unteren Tischplatte 14 aufgebaut (Figuren 3 und 4).

Mit 16 ist ein den Maschinentisch 10 durchsetzender Schnittspalt bezeichnet, aus dem wenigstens ein Kreissägeblatt eines unter Tisch längs des Schnittspalts 16 fahrenden Sägeaggregats zur Durchführung von Plattenaufteilschnitten auszutauchen vermag.

Der auf der Platteneinschubseite sowie der auf der Plattenausschubseite vorhandene Teil 12a bzw. 12b der oberen Tischplatte 12 weist eine Vielzahl von in seitlichem Abstand einander zugeordneten Eingriffnuten 18 bzw. 20 auf, die zueinander fluchten und sich senkrecht zum Schnittspalt 16 erstrecken.

Zur Durchführung von Plattenaufteilschnitten ist oberhalb des Maschinentisches 10 in der Ebene des Schnittspaltes 16 in bekannter Weise ein nicht dargestellter, absenkbarer Druckbalken vorgesehen, mit dessen Hilfe sich aufzuteilendes Plattenmaterial auf der oberen Tischplatte 12 festlegen läßt, das üblicherweise, insbesondere wenn es sich um sehr dünnes Plattenmaterial handelt, zu einem Plattenpaket gestapelt ist.

Das Plattenmaterial wird in bekannter Weise mittels einer horizontal und senkrecht zum Schnittspalt 16 verstellbaren, programmgesteuerten Vorschubvorrichtung der Plattensäge zur Durchführung von Aufteilschnitten zugeführt, wozu diese mit in Figur 1 angedeuteten Spannzangen 22 ausgestattet ist, welche z.B. einen Plattenstapel an dessen Hinterkante fassen bzw. festhalten.

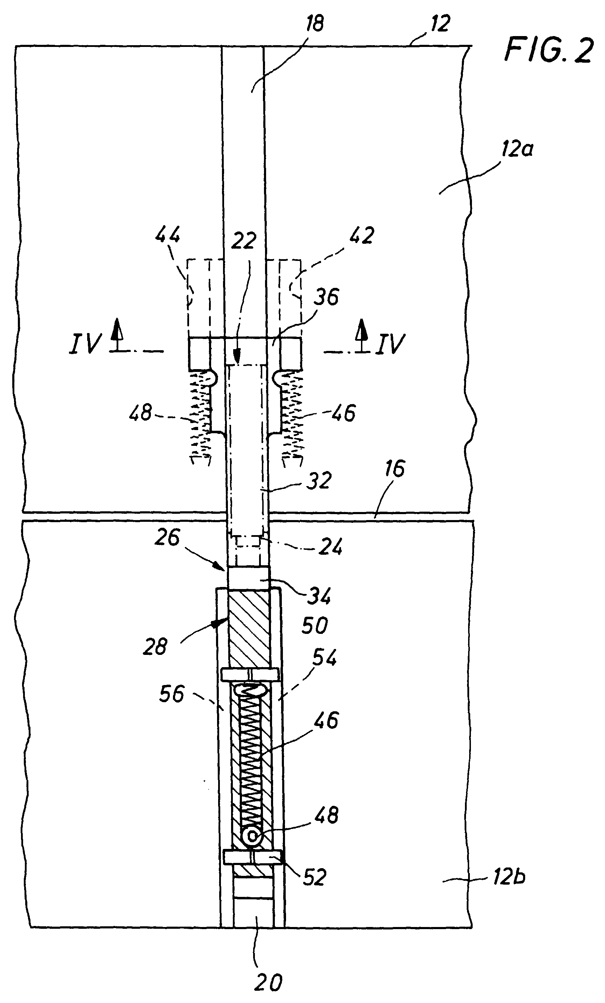

Diese Spannzangen 22 befinden sich in einer, jeweils eine der Eingriffsnuten 18 bzw. 20 enthaltenden, vertikalen Ebene, wobei deren unterer Zangenschenkel 24 in der Schlußphase einer Plattenaufteiloperation zunächst mit der jeweiligen Eingriffsnut 18 in Eingriff kommen und dabei ggf. soweit in Vorschubrichtung bewegt werden kann, dass er, wie Figur 2 zeigt, den Schnittspalt 16 durchqueren wird.

Jede Eingriffsnut 18 bzw. 20 ist mit einem in Vorschubrichtung gegen die Wirkung einer Speicherkraft verstellbaren Einsatz 26 bzw. 28 ausgestattet, der eine zweifache Aufgabe erfüllt:

Zum einen dienen die Einsätze 26 dazu, während eines Aufteilschnittes, die Eingriffsnuten 18, 20 am Schnittspalt 16 staubdicht zu verschließen; zum anderen überbrücken sie am Schnittspalt die jeweilige Eingriffsnut 18 bzw. 20, so dass insbesondere dünnes Plattenmaterial mit einer Dicke von 0,1 mm bis 3,0 mm beim Festspannen des Plattenstapels sowie beim Sägen durch den Schnittdruck nicht in die Eingriffsnuten 18, 20 hineingedrängt werden und dadurch eine unsaubere Schnittkante bzw. im Falle von metallbeschichteten Leiterplatten, z.B. ein Grat entstehen kann.

Der Einsatz 26 der Eingriffsnuten 18 bildet hierbei einen am Nutboden 30 verschiebbar angeordneten, länglichen und flach ausgebildeten Schieber 32, der vom unteren Zangenschenkel 24 überfahrbar ist und an seinem, dem Schnittspalt 16 zugekehrten Ende ein Nutverschlußelement 34 trägt. Dasselbe ist quaderförmig, entspricht in Breite und Höhe im wesentlichen den Abmessungen des Querschnitts der Eingriffsnut 18 und verschließt diese in der Ausgangsstellung des Schiebers 32 an ihrem dem Schnittspalt 16 zugekehrten Nutende (siehe Figur 1).
Das an der Oberseite der oberen Tischplatte 12 mit dieser bündig abschließenden Nutverschlußelement 34 erstreckt sich über einen Bereich in Längsrichtung der Eingriffsnut 18, der sicherstellt, dass bei Sägeoperationen ein Durchhängen, Auffächern oder Flattern des durchzutrennenden Plattenmaterials unmöglich und somit stapelseitig eine exakte Schnittkante gewährleistet ist.

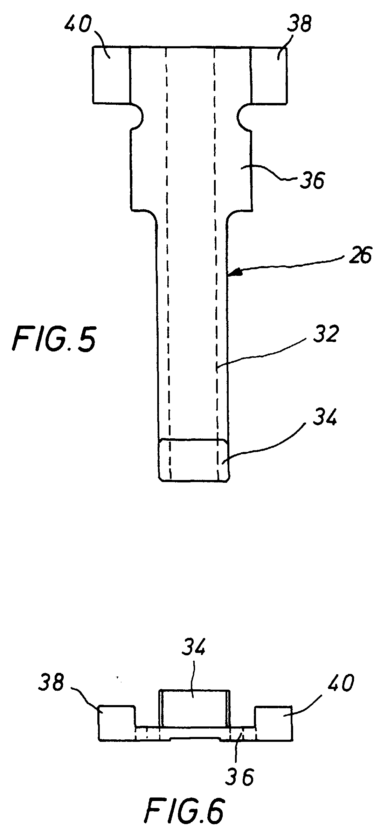

Wie aus den Figuren 2 sowie 4 bis 6 zu ersehen ist, ist das vom Schnittspalt 16 abgekehrte Endstück des Schiebers 32 zu einer Führungsplatte 36 verbreitert, die in Bereiche ihres Hinterendes im Querschnitt U-förmig ausgebildet ist. Ihre U-Schenkel 38 und 40 sind jeweils in einer unteren Führungsnut 42 bzw. 44 der oberen Tischplatte 12 geführt, die sich parallel zur Eingriffsnut 18 erstrecken. Ebenso könnte diese Schieberführung auch kinematisch umgekehrt vorgesehen sein.

Die beiden U-Schenkel 38, 40 ragen seitlich von der Führungsplatte 36 ab und stützen sich jeweils an einer in einer der Führungsnuten 42, 44 angeordneten Rückstellfeder 46 bzw. 48 ab. Diese erstrecken sich von den U-Schenkeln 38, 40 in Richtung auf den Schnittspalt 16 und liegen an einem Führungsnutende an. Die Verschluß- bzw.
Ausgangsstellung des Nutverschlußelementes 34 wird durch Anfahren der verbreiterten Führungsplatte 36 des Einsatzes 26 am Hinterende der Führungsnut 42, 44 definiert.

Der in den Eingriffsnuten 20 vorgesehene Einsatz 28 bildet in bekannter Weise einen Schieber, dessen Querschnitt im wesentlichen dem Nutquerschnitt entspricht. Der Schieber 28 weist bis in den Bereich seines Hinterendes den gleichen Querschnitt auf und schließt oben mit der Oberseite der oberen Tischplatt 12 bündig ab.

Im Schieberinneren ist eine sich in dessen Längsrichtung erstreckende Druckfeder 46 vorgesehen, die sich mit ihrem dem Schnittspalt 16 zugekehrten Federende am Schieber 28 und mit ihrem anderen Federende an einem an der unteren Tischplatte 14 gehaltenen Widerlager 48 abstützt.

50 und 52 bilden vom Schieber 28 seitlich abragende und mit Führungsnuten 54 bzw. 56 der oberen Tischplatte 12 in Eingriff befindliche Führungszapfen, welche die Schieberausgangsstellung gemäß Figur 1 definieren, in welcher der Schieber 28 die Eingriffsnut 20 im Schnittspalt 16 verschließt.

Nutverschlußelement 34 und Schieber 28 bilden somit in ihrer Ausgangsstellung Wandabschnitte des Schnittspaltes 16 sowie im Bereich der Eingriffsnuten 18, 20 Abschnitte der oberen Tischplattenfläche.

Fährt in die Eingriffsnuten 18 der untere Spannzangenschenkel 24 ein, so überfährt dieser zunächst den Schieber 32, bis er am Verschlußelement 34 des Einsatzes 26 anfährt und im Zuge seiner Vorschubbewegung diesen mitnimmt und mit ihm in die ausschubseitige Eingriffsnut 20 hineinschiebt. Dadurch wird zugleich deren Einsatz bzw. Schieber 28 mitverschoben.

Wird die Spannzange vor Durchführung des folgenden Aufteilschnittes wieder zurückgesteuert, eilen beide Einsätze 26 und 28 federbetätigt dieser nach und nehmen ihre in den Figuren 1 und 3 gezeigte, den Schnittspalt 16 wieder freigebende Ausgangs- bzw. Verschlußstellung ein.

## Patentansprüche

1. Maschinentisch (10) für eine Plattenaufteilsäge, dessen Schnittspalt (16) an der Tischoberseite querverlaufende Eingriffsnuten (18, 20) zugeordnet sind, die an beiden Spaltlängsseiten im Seitenabstand voneinander vorgesehen sind und, zueinander fluchtend, den Maschinentisch (10) durchsetzen und in die ein unterer Zangenschenkel (24) jeweils einer Spannzange einer Vorschubvorrichtung einschiebbar ist, durch die plattenförmiges Schnittgut zur Durchführung von Trennschnitten quer zum Schnittspalt (16) verschiebbar ist, wobei in den im Maschinentisch (10) plattenausschubseitig angeordneten Eingriffsnuten (20) jeweils ein Schieber (28) vorgesehen ist, dessen Querschnitt im wesentlichen dem Nutquerschnitt entspricht und der in der Eingriffsnut (20) in Plattenausschubrichtung gegen die Wirkung einer Speicherkraft verschiebbar ist, die versucht, den Schieber (28) in einer Stellung zu halten, in der dieser mit seinem dem Schnittspalt (16) zugekehrten Endstück die Eingriffsnut (20) sowohl innerhalb des Schnittspalts (16) als auch oben verschließt, **dadurch gekennzeichnet,** dass in jeder platteneinschubseitig vorgesehenen Eingriffsnut (18) ein verschiebbares Nutverschlußelement (34) angeordnet ist, das in seiner Ausgangsstellung die Eingriffsnut (18) an ihrem, innerhalb des Schnittspaltes (16) ausmündenden Nutende und bereichsweise in Nutlängsrichtung oben verschließt und das durch den in die Eingriffsnut (18) einfahrenden, unteren Zangenschenkel (34) der Spannzange, den Schnittspalt (16) durchquerend in die gegenüberliegende, plattenausschubseitig vorgesehene Eingriffsnut (20) einschiebbar und bei zurückfahrender Spannzange durch eine Speicherkraft in seine Ausgangslage zurücksteuerbar ist.

2. Maschinentisch nach Anspruch 1, dadurch gekennzeichnet, dass das Nutverschlußelemet (34) quaderförmig ist und in Breite und Höhe im wesentlichen die Abmessungen des Querschnittes der Eingriffsnut (18) aufweist.

3. Maschinentisch nach Anspruch 2, dadurch gekennzeichnet, dass das Nutverschlußelement (34) an den dem Schnittspalt (16) zugekehrten Ende eines in der Eingriffsnut (18) verschiebbar angeordneten und vom Zangenschenkel der Spannzange überfahrbaren flachen Schiebers (32) vorgesehen ist, dessen anderes Schieberende zu einer im Querschnitt U-förmigen, die Nutwände der Eingriffsnut (18) untergreifenden Führungsplatte (36) verbreitert ist, deren U-Schenkel (38, 40) in zur Eingriffsnut (18) parallelen, unteren Führungsnuten (42, 44) des Maschinentisches (10) geführt und jeweils an einer in den Führungsnuten (42, 44) angeordneten und am Maschinentisch (10) abgestützten Druckfeder (46 bzw. 48) abgestützt sind.
